(19) Europäisches Patentamt
European Patent Office
Office européen des brevets

(11) **EP 3 088 174 B1**

(12) **EUROPEAN PATENT SPECIFICATION**

(45) Date of publication and mention
of the grant of the patent:
**11.07.2018 Bulletin 2018/28**

(21) Application number: **15397516.4**

(22) Date of filing: **29.04.2015**

(51) Int Cl.:
*B32B 5/02* (2006.01)          *B32B 27/08* (2006.01)
*B32B 27/10* (2006.01)        *B32B 27/12* (2006.01)
*B32B 27/30* (2006.01)        *B32B 27/34* (2006.01)
*B32B 27/36* (2006.01)        *B32B 27/40* (2006.01)
*E04B 1/62* (2006.01)          *E04B 1/66* (2006.01)

(54) **AN ADAPTIVE WATER VAPOUR BARRIER**

FEUCHTEADAPTIVE WASSERDAMPFSPERRE

MEMBRANE PARE-VAPEUR INTELLIGENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.11.2016 Bulletin 2016/44**

(73) Proprietor: **Walki Group Oy
02170 Espoo (FI)**

(72) Inventors:
• **Hyytiäinen, Juho
37600 Valkeakoski (FI)**

• **Korpela, Heikki
37600 Valkeakoski (FI)**

(74) Representative: **Berggren Oy, Tampere
Visiokatu 1
33720 Tampere (FI)**

(56) References cited:
**EP-A1- 2 554 758        EP-A2- 1 296 002
WO-A1-02/072350        FR-A1- 2 997 649
US-A1- 2007 015 424**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the Invention

The invention relates to an adaptive water vapour barrier for use in the thermal insulation of buildings, especially for thermal insulation procedures in new buildings and in the renovation of old buildings. The invention further relates to a water vapour control sheet comprising such an adaptive water vapour barrier. The invention further relates to a building and/or a use of such a water vapour control sheet and/or such an adaptive water vapour barrier.

Background of the Invention

Thermal insulation procedures are carried out in the construction of new buildings and in the renovation of old buildings. In thermal insulation, water vapour tends to diffuse from high humidity to low humidity. Therefore, in the winter time, water vapour tends to diffuse from the inside of a building to the outside of the building. To ensure that such vapour, if and when diffused into the insulation, can dry out, moisture barriers should not be used inside the thermal insulation or close to the outer wall of the building. Conversely, during summer, rain may fall and moisten the outer surfaces of a building. In order to prevent such moisture from penetrating the insulation, a sufficient water vapour barrier may be used, at least near the outer wall of the building. Thus, there are two controversial needs: sufficient diffusion and sufficient protection therefrom.

It is known that the ambient relative humidity, in particular in the northern and southern temperate zones including areas such as Europe, northern Asia, northern America, Australia, South America, and southern Africa, depends on the season. The ambient relative humidity during the winter is typically high, while the ambient relative humidity during the summer is low. Adaptive water vapour barriers, that have a high diffusion resistance (i.e. high $s_d$ value) at a low relative humidity, and also have a low diffusion resistance (i.e. low $s_d$ value) at a high relative humidity, are known. Such materials can be used as water vapour barriers to ensure sufficient diffusion (i.e. ventilation) during winter, and to ensure sufficient vapour resistance (i.e. moisture block) during summer. Such materials will - to some extent - prevent damage by moisture to the building material that is used.

Vapour barriers of which vapour transmittance depends on relative humidity are known from FR2997649 and EP1296002. Both these documents disclose a multilayer film having a layer of ethylene vinyl alcohol (EVOH) sandwiched in between two polyamide (PA) layers.

However, the current adaptive water vapour barrier materials have the problem that the vapour diffusion resistance, i.e. the $s_d$ value, is not sufficiently sensitive to the relative humidity. Known materials have e.g. a diffusion resistance $s_d$ of about 5 m or less at the relative humidity RH=30%; and a diffusion resistance $s_d$ of about 0.5 m or more at the relative humidity RH=70%. To better prevent damage by moisture to the building materials, higher resistivity would be needed in dry environments (e.g. in summer) and higher diffusion would be needed in humid environments (e.g. in winter).

Summary of the Invention

The invention relates to an adaptive water vapour barrier, which for a relative humidity (RH) of 90 % has a vapour diffusion thickness that is less than in the barriers of prior art, and for a relative humidity (RH) of 30 % has a vapour diffusion thickness that is more than in the barriers of prior art. It has been observed that the adaptive water vapour barrier, i.e. a multilayer polymer structure, according to independent claim 1 has such properties. Preferable structural properties and obtainable $s_d$ values are disclosed in the dependent claims 2-10. Other dependent claims are related to a water vapour control sheet and a building. The water vapour barrier or the water vapour control sheet may be used in between thermal insulation elements.

Description of the Drawings

Figs. 1a and 1b
show embodiments of an adaptive water vapour barrier,
Fig. 2a shows examples of oxygen transmission rate and its dependence on relative humidity, for the first layer,
Fig. 2b shows examples of water vapour transmission rate and its dependence on relative humidity, for PVA and EVOH.
Fig. 3 shows an example of water vapour diffusion through a second layer or a third layer,
Fig. 4 shows an example of water vapour diffusion resistance and its dependence on relative humidity, for the second or the third layer,
Fig. 5 shows an example of water vapour diffusion thickness and its dependence on relative humidity of an adaptive water vapour barrier,
Figs. 6a to 6d
show embodiments of a water vapour control sheet comprising an adaptive water vapour barrier,

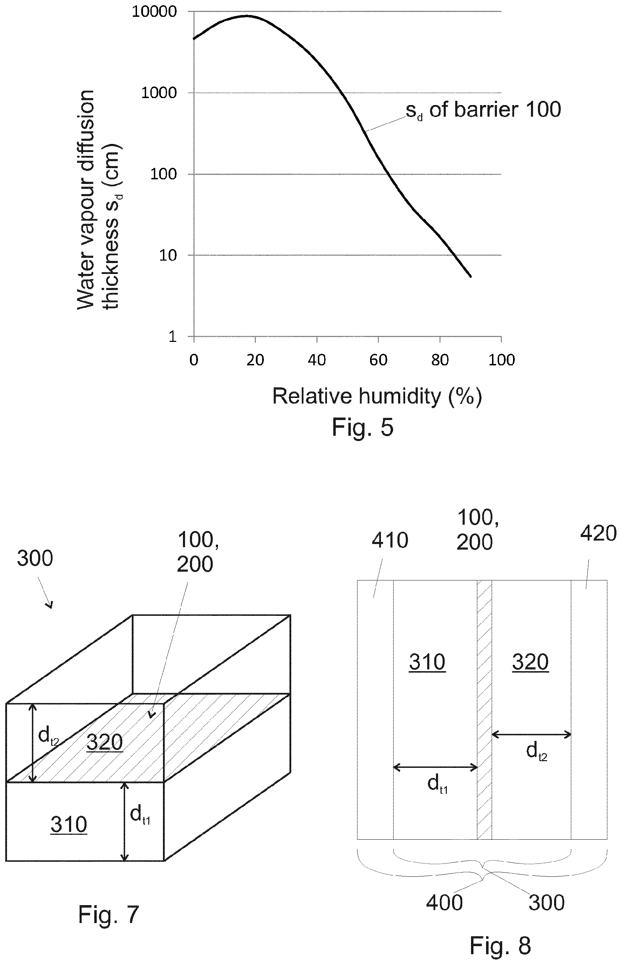

Fig. 7 shows a thermal insulation element comprising a water vapour control sheet in between two layers of thermally insulating material, and
Fig. 8 shows a wall comprising the thermal insulation element of Fig. 7.

Detailed Description of the Invention

The invention relates to an adaptive water vapour barrier, which at a relative humidity (RH) of 90 % has a vapour diffusion thickness (i.e. an $s_d$ value) that is less than in the barriers of prior art, and at a relative humidity (RH) of 30 % has a vapour diffusion thickness (i.e. an $s_d$ value) that is more than in the barriers of prior art.

A water vapour diffusion thickness of a film having a certain thickness, i.e. an $s_d$ value of the film, describes the film's ability to resist water vapour diffusion through the film. A film having a vapour diffusion thickness of $s_d$ penetrates - by diffusion - water vapour equally well as a layer of stagnant air having the thickness $s_d$. In general, a small $s_d$ value implies fast diffusion. The parameter is commonly called water vapour diffusion thickness or vapour diffusion thickness (for short). Measuring of the value of the $s_d$ parameter is described in the standards ASTM E 96/E 96M (2005), EN ISO 12572 (2001), EN 1931 (2000). The measurements are performed at a temperature (T) and in a pressure (p). Temperature and pressure are relevant, as the vapour diffusivity of stagnant air depends on these conditions, and the $s_d$ value is calculated in proportion to this. In addition, a difference of water vapour partial pressure is imposed between the surfaces of the film, whereby the film will be exposed to a humid environment. Unless otherwise stated, the diffusive properties of the film may be dependent on ambient relative humidity (RH), wherein the relative humidity refers to the greater of the relative humidities on different sides of the film. In a typical test, the relative humidity on a drier side of the film is very low, such as at most 2 % or 0 %.

As indicated above, the $s_d$ value relates to the film, the film evidently having a thickness, say d. Clearly, a thick film has a larger water vapour diffusion thickness than a thin film of the same material. Therefore, a water vapour resistance factor $\mu$, i.e. vapour resistance factor $\mu$ for short, can be defined as $\mu = s_d/d$. This will depend on p, T, and RH, as the vapour diffusion thickness $s_d$ depends on them.

Experiments on the amount of vapour diffused through the film can be conducted. The diffusivity can alternatively be given as the amount of diffused water. The amount is proportional to the area of the film, the partial pressure difference of vapour on different sides of the film, and time; and inversely proportional to the film thickness. Thus, the result describing the vapour diffusivity of the material of the film may alternatively be given as

$$WVTR = \frac{\Delta m d}{A t \Delta p},$$

wherein WVTR is the water vapour transmission rate, $\Delta m$ the mass of diffused water, d the thickness of the film, A the area of the film, t the time, and $\Delta p$ the partial pressure difference of water vapour on different sides of the film. Often, the thickness is not included in WVTR, instead, the value of diffused water vapour is given in connection with the film thickness. Moreover, often, the pressure difference is not given, instead, the values of relative humidities on both sides of the film are given. Also, reasonably often, the relative humidity on the dry side of the film is zero or substantially zero, such as less than 5%. A method to measure WVTR is described e.g. in the standard EN-ISO 12572 (version 12572:2001).

The parameters WVTR, $s_d$, and $\mu$ are related, since the diffused mass, $\Delta m$, is related to the vapour resistance factor $\mu$ by

$$\Delta m = \frac{A t \Delta p \delta_a}{d \mu}.$$

Conversely, the water vapour resistance factor $\mu$ is inversely proportional to the product $\Delta m d$. Here $\delta_a$ is the water vapour diffusion coefficient in air [$kgPa^{-1}s^{-1}m^{-1}$], which can be calculated from simplified Schirmer's equation as

$$\delta_a = \frac{1.97 \times 10^{-7} T^{0.81}}{p},$$

wherein T is the absolute temperature (in K) and p is the pressure (in Pa).

Still further, the partial pressure difference Δp can be calculated from the relative humidity values on different sides of the film. For further details we refer to the standards and/or an article "Measurement of Moisture Transport through Perforated Vapour Barriers" by Petr Slanina and Sarka Silarova (available online on 20 March 2015).

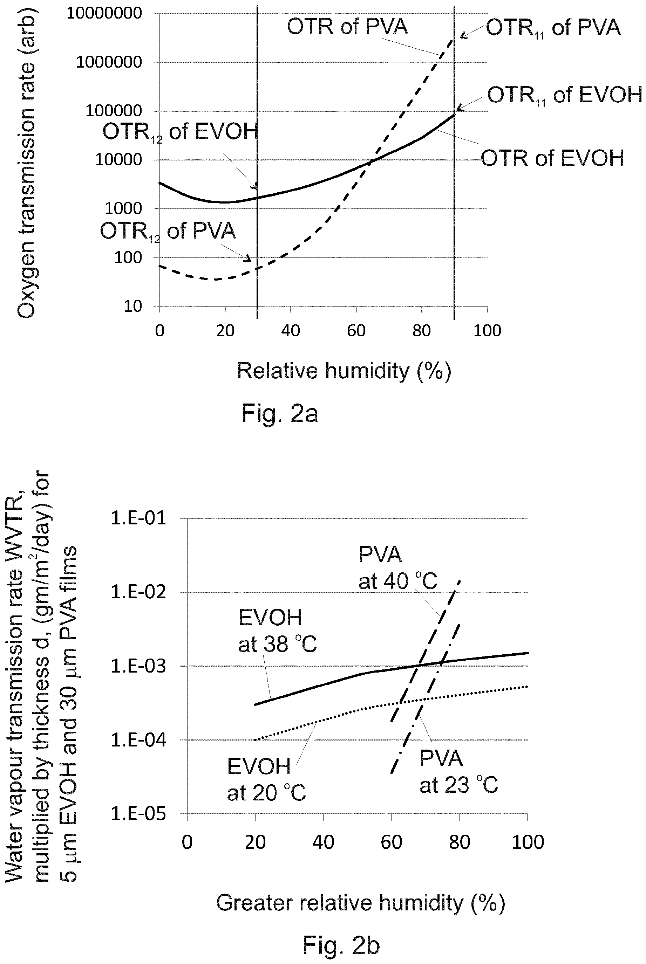

It is also commonly known that the water vapour transmission rate and an oxygen transmission rate (OTR) are positively strongly correlated, as indicated e.g. in Figs 2a and 2b. Furthermore, the oxygen transmission rate can, in some cases, be more easily measured. Moreover, the oxygen transmission rate can be measured in a constant relative humidity, i.e. in conditions, wherein the partial pressure of water vapour is the same on both sides of the film. Thus, also the OTR can be used to describe the WVTR of the film. Somewhat like WVTR, OTR is determined from a similar test by the equation

$$OTR = \frac{\Delta V d}{A t \Delta p},$$

wherein ΔV is the volume of diffused oxygen, d the film thickness, A the film area, t the time, and Δp the difference between partial pressures of oxygen on different sides of the film. The measurements are typically performed at the temperature 23 °C. Often the measured OTR is normalized to correspond to a partial pressure difference of 1 atm, whereby some reported values of OTR lack the unit of pressure. Moreover, often a standard thickness d is used in the measurements, whereby the OTR may also lack a unit of thickness. A typical thickness for measurements is 30 $\mu$m. A method to measure OTR is described e.g. in the standard ASTM D1434. Herein the most recent version of the standard, most recent relative to April 1st 2015, is being referred to. Unless otherwise stated, this applies also to other standards referred to in this description.

As motivated above, in building insulation, adaptive water vapour barriers with a suitable water vapour diffusion thickness is needed. Moreover, the water vapour diffusion thickness should depend on the ambient relative humidity (RH) relatively steeply.

It has been found that a multilayer structure comprising at least three layers and having other properties as will be described later, is particularly suitable for the purpose.

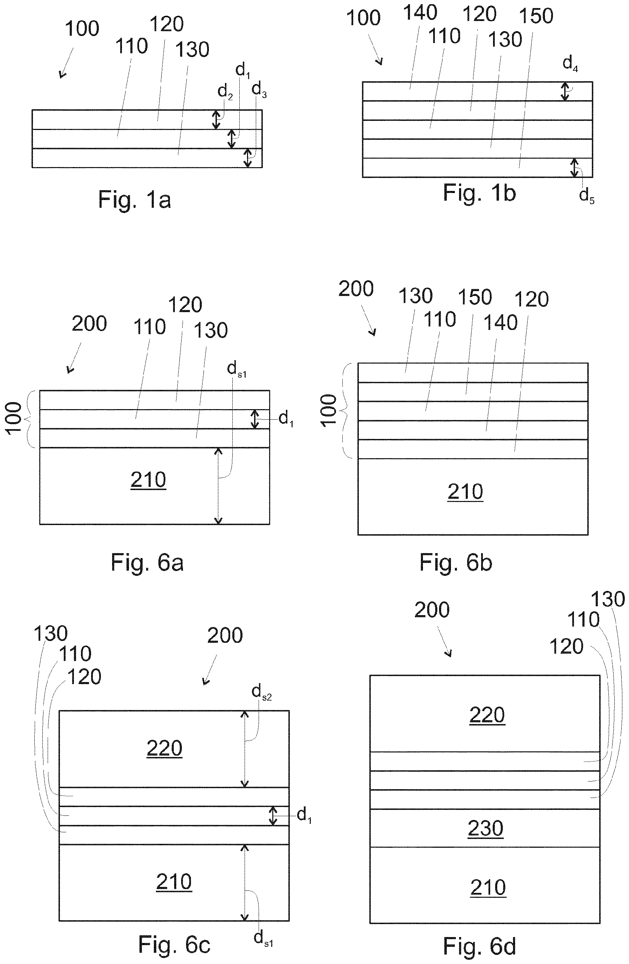

Referring to Fig. 1a, an embodiment of an adaptive water vapour barrier 100 comprises a first layer 110, a second layer 120 and a third layer 130. The first layer is arranged in between the second layer 120 and the third layer 130. Thus, the second layer 120 is arranged on a first side of the first layer 110. Moreover, the third layer 130 is arranged on a second side of the first layer 110, the second side being opposite to the first side. The layers are joined to each other to form a solid multilayer film 100. However, an additional layer may be arranged in between these layers (see e.g. Fig. 6b). The layers 110, 120, 130 are made of polymeric material that has a suitable water vapour diffusion resistance and a suitable thickness with respect to the required properties.

As for the first layer 110, it has been found that polyvinyl alcohol (PVA) has suitable water vapour diffusion properties. Moreover, these properties depend sufficiently steeply on the ambient relative humidity. Polyvinyl alcohol (PVA) may be crystalline or amorphous. Amorphous PVA has been observed to have particularly suitable properties. In an embodiment, the first layer 110 comprises polyvinyl alcohol (PVA). In an embodiment, the first layer 110 consists of one of (i) a layer of polyvinyl alcohol (PVA), ii) a layer consisting of a mixture of PVA and EVOH, and iii) a multilayer structure, wherein each sub-layer consists of PVA or a mixture of EVOH and PVA. For example, the first layer 110 may be a EVOH-PVA-EVOH multilayer. In each of the aforementioned embodiments, PVA may be crystalline or amorphous, preferably amorphous. The first polymer layer 110 comprises poly vinyl alcohol (PVA). In an embodiment the first polymer layer 110 consists of poly vinyl alcohol (PVA). In an embodiment the first polymer layer 110 comprises amorphous poly vinyl alcohol (PVA). In an embodiment the first polymer layer 110 consists of amorphous poly vinyl alcohol (PVA).

In an embodiment the first polymer layer 110 comprises ethylene vinyl alcohol (EVOH) and polyvinyl alcohol (PVA). In such a case, the first layer 110 may comprise a mixture of these materials, or it (110) may comprise at least two sub-layers, of which one sub-layer consists of PVA, EVOH or their mixture. Another sub-layer may consist of EVOH, PVA, or some other material, respectively.

In an embodiment the first polymer layer 110 comprises polyvinyl alcohol (PVA). In such a case, the first layer 110 may comprise at least two sub-layers, of which one sub-layer consists of PVA or EVOH. Another sub-layer may comprise some other material.

In an embodiment the first polymer layer 110 comprises ethylene vinyl alcohol (EVOH) and amorphous polyvinyl alcohol (PVA). In such a case, the first layer 110 may comprise a mixture of these materials, or it (110) may comprise at least two sub-layers, in the way described above. In an embodiment the first polymer layer 110 comprises amorphous polyvinyl alcohol (PVA). In such a case, the first layer 110 may comprise at least two sub-layers, in the way described above.

In an embodiment the first polymer layer 110 comprises crystalline polyvinyl alcohol (PVA) and amorphous polyvinyl alcohol (PVA). In such a case, the first layer 110 may comprise a mixture of these materials, or it (110) may comprise at least two sub-layers, in the way described above. In an embodiment the first polymer layer 110 comprises either crystalline polyvinyl alcohol (PVA) or amorphous polyvinyl alcohol (PVA). In such a case, the first layer 110 may comprise at least two sub-layers, in the way described above

Not only the material, but also the thickness thereof affect the vapour transmission properties. The thickness $d_1$ (see Fig. 1) of the first layer 110 is from 2 $\mu$m to 25 $\mu$m.

Moreover, the material for the first layer 110 is selected in such a way that a layer of a material of the first layer as such has suitable properties. Suitable properties include reasonable steep dependence of OTR as function of ambient relative humidity. A film made from a material of the first layer 110 has a first primary oxygen transmission rate $OTR_{11}$ at a temperature T = 23 °C, in a pressure p = 1 atm, and at a first relative humidity $RH_1$=90%; and a first secondary oxygen transmission rate $OTR_{12}$ at the same temperature, in the same pressure, and at a second relative humidity $RH_2$=30%. It has been found that the dependence is sufficiently steep, when the ratio of the first primary oxygen transmission rate $OTR_{11}$ to the first secondary oxygen transmission rate $OTR_{12}$, $OTR_{11}/OTR_{12}$, is at least 40. In an embodiment, the ratio is at least 5000. These values are shown in Fig. 2a. This ratio can be selected by choosing the material or the materials for the first layer 110. As for the test, the thickness of the layer of the material in the test may be e.g. 30 $\mu$m. As indicated above, the first primary oxygen transmission rate $OTR_{11}$ is related to a first primary vapour resistance factor $\mu_{11}$ and the first secondary oxygen transmission rate $OTR_{12}$ is related to a first secondary vapour resistance factor $\mu_{12}$ of the first layer 110.

In the above, the wording "as such" implies that the first primary oxygen transmission rate $OTR_{11}$ refers to a layer of a material from which the layer 110 (or a sub-layer thereof) will be manufactured. The properties of the single layer - after manufacturing the multilayer film - would be difficult to measure. Moreover, the properties may change to some extent due to the other layers and/or manufacturing. Provided that the first layer 110 itself comprises multiple sub-layers, the oxygen transfer rate of such a multilayer structure can be calculated as an inverse of the sum of inverses, i.e. $OTR^{-1}= OTR_1^{-1}+ OTR_2^{-1} + OTR_3^{-1}$. Thus, in this case, the materials for the first layer 110 and the corresponding thicknesses of the sub-layers are selected in such a way that first layer 110 comprising sub-layers of the materials with suitable thickness can be estimated to have a suitable oxygen transmission rate. In the estimation, the known properties of the materials, in connection with the equation for the total OTR can be used. The measurement of OTR is described in the aforementioned standard for OTR.

Fig. 2b shows some typical results from a water vapour transmission (WVTR) rate test. The units are in gm/m$^2$/day. The results are from WVTR tests for a 5 $\mu$m thick EVOH film at two temperatures, when one side of the film is dry and the relative humidity of the other side is shown as the horizontal axis. In the figure, the result of the test, WVTR, is multiplied by the film thickness d=5 $\mu$m, because the WVTR decreases as the film thickness increases (see the equation for WVTR). As shown in Fig. 2b, the WVTR of EVOH may increase three fold, when the relative humidity increases from 30% to 90% at the temperature 20 °C. At the temperature 38 °C, the increase is also three fold. The measurement of WVTR is described in the aforementioned standard for WVTR.

Fig. 2b also shows some typical results from a water vapour transmission rate test for a 30 $\mu$m thick PVA film at two temperatures, when one side of the film is dry and the relative humidity of the other side is shown as the horizontal axis. In the figure, the result of the test, WVTR, is multiplied by the film thickness d=30 $\mu$m. As shown in Fig. 2b, the WVTR of PVA may increase 100 fold, when the relative humidity increases from 60% to 80% at the temperature 23 °C. At the temperature 40 °C, the increase is about 75 fold. The measurement of WVTR is described in the aforementioned standard for WVTR. Evidently, a relative humidity increase from 30 % to 90 % would increase the WVTR at least as much as an increase from 60 % to 80 %.

The second and the third layers 120, 130 have at least five functions. First, these layers 120, 130 have sufficiently low water vapour diffusion resistance, to allow the first layer 110 to control the WVTR of the multilayer film 100. Second, these layers 120, 130 are sufficiently resistant to liquid water, to prevent the first layer 110 from being exposed to liquid water, as the first layer may be water soluble to some extent. Third, these layers 120, 130 mechanically support the first layer 110. Fourth, these layers 120, 130 improve the manufacturability of the barrier 100. And fifth, these layers 120, 130 improve the bonding of the first layer 110 to support structures, such as the support 210, 220, and/or 230.

It has been found that these properties can be achieved, when the second layer 120 comprises at least one of thermoplastic elastomer (TPE), thermoplastic polyester elastomer (TPEE), thermoplastic polyurethane (TPU), and polyamide (PA); and the third layer 130 comprises at least one of the materials disclosed for the second layer. The second layer 120 may comprise at least two of the aforementioned materials. The third layer 130 may comprise at least two of the aforementioned materials. When more than one type of material is used, further layers (140, 150) can be applied, or one layer may comprise the constituents. Moreover, the thickness $d_2$ (Fig. 1a) of the second layer 120 is in the range from 2 $\mu$m to 17 $\mu$m, and the thickness $d_3$ (Fig. 1a) of the third layer 130 is also in the range from 2 $\mu$m to 17 $\mu$m. This thickness range has been found to be particularly suitable in view of the first four of the aforementioned functions of the second and third layers.

In general, it has been found that a copolymer or a terpolymer that comprises hard polymer blocks and soft polymer blocks, and has a suitable thickness, both itself has a suitable water vapour diffusivity and improves the water vapour diffusive properties of the adaptive water vapour barrier. Such a material has been found to be particularly suitable for the other layers (other than the first layer) of the multilayer adaptive water vapour barrier 100.

A copolymer having soft blocks and hard blocks is a block copolymer comprising primary monomers "a" in the soft block and secondary monomers "b" in a hard block, in a block structure such as -aaaaa-bbbbb-aaaaa-bbbbb-aaaaa-bbbbb-aaaaa-.

The soft blocks (aaaaa) may have an amorphous structure, so that the blocks remain soft. The soft blocks are soft above their glass transition temperature. The hard blocks (bbbbb) have a rigid crystalline structure, which makes the blocks hard. This hardness occurs below the melting temperature of the hard blocks. As an example, the hard blocks may consist of styrene monomers. As an example, the soft blocks may comprise butadiene monomers.

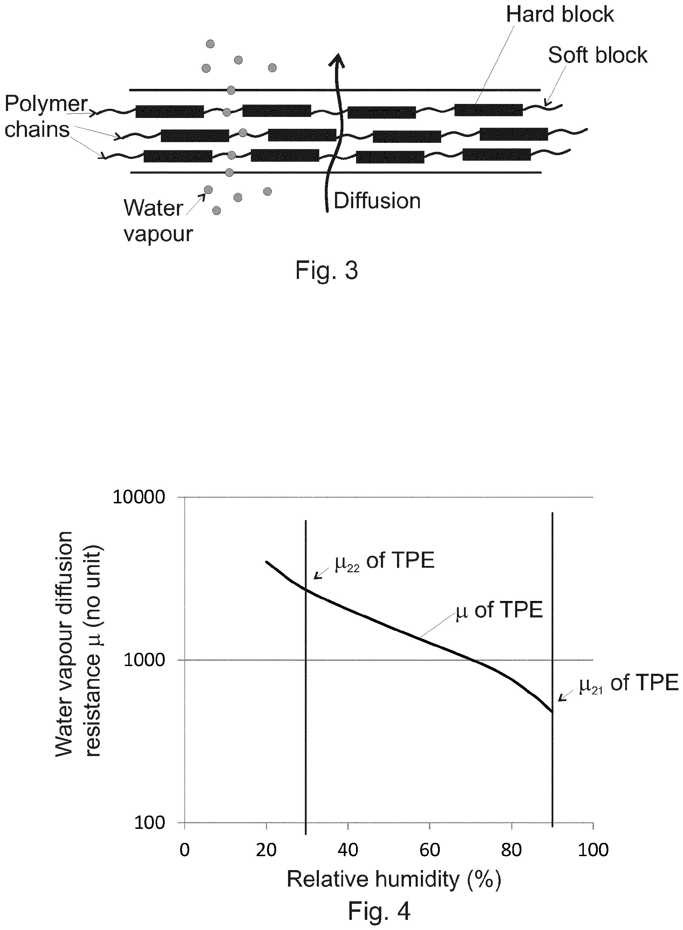

It has been observed, that such a structure is particularly suitable for water vapour diffusion, most likely, because vapour may diffuse through these soft blocks (see Fig. 3). However, to have also suitable diffusion resistance, the material comprises also the hard blocks, which prevent vapour from diffusing. Still further, to provide for sufficient mechanical support, the second and the third layers 120, 130 comprise also these hard blocks.

A terpolymer further comprising tertiaty monomers c may also form a block terpolymer such as -aaa-cc-bbbb-cc-aaa-cc-bbb-cc-aaa- or similar. The block "cc-aaa-cc" or "aaa" may be soft, while the block "bbbb" or "cc-bbbb-cc" (respectively) may be hard.

Thus, the second layer 120 and/or the third layer 130 preferably comprises primary monomers and secondary monomers, whereby the layer 120, 130 may be a copolymer or a terpolymer (or even comprise quaternary monomers). This applies also to further layers 140, 150.

In an embodiment, the second layer 120 comprises polymer material comprising soft blocks and hard blocks in such a way that the soft blocks constitute from 10 w% to 60 w% of the polymer material of the second layer 120. In an embodiment, the third layer 130 comprises polymer material comprising soft blocks and hard blocks in such a way that the soft blocks constitute from 10 w% to 60 w% of the polymer material of the third layer 130. In some embodiments this applies also to the material of the further layers (140, 150, see Fig. 1b). If present, the material for the further layers (140, 150) are preferably selected such that these values apply also to them.

In an embodiment, the soft blocks of the material comprise polyether soft segments, such as poly (tetramethylene oxide) glycol, i.e. PTMO. In an embodiment, the hard blocks of the material comprise poly (buthylene terephthalate), i.e. PBT.

Naturally, the hard blocks are hard only below their melting point. The melting point of BPT is about 220 °C - 225 °C. The soft blocks are soft at least above their glass transition temperature. They may have suitable vapour diffusion properties also below the glass transition temperature.

As discussed, the vapour resistance of the second (and third) layer 120 should be reasonable low. This applies to both at low relative humidity and a high relative humidity. Therefore, in an embodiment, the material of the second layer 120 is selected such that a polymer material of the second layer 120, as such, has a second primary vapour resistance factor $\mu_{21}$ at a temperature T = 23 °C, in a pressure p = 1 atm, and at a first relative humidity $RH_1$ = 90%; and a second secondary vapour resistance factor $\mu_{22}$ at the same temperature, in the same pressure, and at a second relative humidity $RH_2$ = 30%. These values are shown in Fig. 4, for the case, wherein the second layer 120 consists of a thermoplastic elastomer TPE. The second layer is sufficiently permeable to vapour, when both the second primary vapour resistance factor $\mu_{21}$ and the second secondary vapour resistance factor $\mu_{22}$ are less than 5000 (no unit). For example, the material may be such that a d = 30 $\mu$m thick film made from the material has a diffusion thickness $s_d$ from 0.01 m to 0.1 m at both these relative humidities. The resulting resistance factor $\mu = s_d/d$ would be from about 300 to 3000, i.e. less than 5000. If the second layer 120 comprises sub-layers, the $s_d$ value for the second layer as a whole can be calculated as the sum of the $s_d$ values of the separate sub-layers.

Moreover, the dependence of the vapour resistance factor on relative humidity of the second layer needs not to be steep because of the properties of the first layer 110. Thus, in an embodiment, the ratio of the second secondary vapour resistance factor $\mu_{22}$ (see above for ambient conditions) to the second primary vapour resistance factor $\mu_{21}$ (see above for ambient conditions), $\mu_{22}/\mu_{21}$, is at most 18. As indicated in Fig. 4, this ratio may be less than 10. The ratio $\mu_{22}/\mu_{21}$ may be at least 0.05 or at least 0.1.

What has been said above for the properties of a material of the second layer 120 and the materials of the second layer 120 applies also to the material/materials of the third layer 130.

Based on experiments done with the films, it seems that when the materials and their thicknesses are selected as indicated above, whereby the properties are in the aforementioned ranges, different layers of the adaptive barrier 100 are mainly responsible for vapour diffusion resistance at different humidity regions. For example, at a high relative humidity, the diffusion resistance of the first layer 110 becomes small compared to the diffusion resistance of the second 120 and/or third layer 130. This is because the sensitivity of the layers to the humidity is different. In contrast, at low relative humidity, the first layer 110 is responsible for most of the diffusion resistance. This transition most likely gives rise to the desired properties of the barrier 100. In addition, it may be that the interfaces between the layers 110, 120, 130 also affect diffusion, and that the interfaces may affect the diffusion properties of the layers nearby the interface. I.e. the interfaces may affect the properties of the materials. The combinations of materials, as indicated above, have been observed to perform well over the desired humidity range.

Referring to Fig. 1b, the adaptive water vapour barrier 100 may comprise further layers, such as a fourth polymer layer 140 and a fifth polymer layer 150. All the polymer layers 110, 120, 130, 140, 150 are joined together to form the barrier 100, and the first layer 110 is arranged in between the second layer 120 and the third layer 130. The second layer 120 or the third layer 130 may be a surface layer, or it may be neighbouring the first layer 110 (see Figs. 1a, 1b, and 6b).

The fourth layer 140 may comprise at least one of

- thermoplastic elastomer (TPE)
- thermoplastic polyester elastomer (TPEE),
- thermoplastic polyurethane (TPU),
- an ionomer,
- ethyl vinyl alcohol (EVOH),
- polyamide (PA), such as polyamide-6 (PA6),
- ethyl vinyl acetate (EVA), and
- ethyl methacrylate (EMA), wherein the methacrylate (MA) content is from 17 w% to 35 w%.

Preferably the fourth layer comprises at least one of thermoplastic elastomer (TPE), thermoplastic polyester elastomer (TPEE), thermoplastic polyurethane (TPU), and polyamide (PA).

As for the thickness of the second and subsequent layers, in an embodiment, the total thickness of all such layers of the water vapour barrier, that are left on a first side of the first layer 110, is from 2 $\mu$m to 17 $\mu$m to ensure sufficient watertightness of these layers on the first side of the first layer 110. Moreover, at least one such layer, preferably all such layers, may be extrudable, or may have been made by extrusion. This improves the watertightness. Such thickness ensures that the layers on the first side, in combination, serves also the other functions of the layers, as discussed above. E.g. in Fig. 1b this total thickness refers to the total thickness of the layers 120 and 140.

As for the thickness of the third and subsequent layers, in an embodiment, the total thickness of all such layers of the water vapour barrier, that are left on a second side of the first layer 110, the second side being opposite to the first side, is from 2 $\mu$m to 17 $\mu$m to ensure sufficient watertightness of these layers on the second side of the first layer 110. Moreover, at least one such layer, preferably all such layers, may be extrudable, or may have been made by extrusion. This improves the watertightness. Such thickness ensures that the layers of the second side, in combination, serves also the other functions of the layers, as discussed above. E.g. in Fig. 1b this total thickness refers to the total thickness of the layers 130 and 150.

As evident from the above discussion related e.g. to thicknesses, the combination of the fourth 140 and second layers 120 e.g. in Fig. 1b can be seen also as being a second layer comprising the sublayers 120 and 140. In other words, the combination of all such extrudable or coextrudable layers of the water vapour barrier, that are left on a first side of the first layer 110, may be seen to constitute a second layer 120. Correspondingly, all such extrudable or coextrudable layers of the water vapour barrier, that are left on an opposite second side of the first layer 110, may be seen to constitute the third layer 130.

The thickness of the fourth layer 140 may be selected to conform with the total thickness of the multilayer barrier 100, as will be discussed below.

What has been said about the fourth layer 140 and its thickness applies also to a fifth layer 150 of the multilayer barrier 100.

Examples of material combinations for the adaptive water vapour barrier 100 include (samples 12-16 do not belong to the invention):

Table 1: examples of material selections for the adaptive water vapour barrier. For the acronyms, see text. PVA may refer to amorphous PVA or crystalline PVA or a partly crystalline PVA. Samples 12-16 do not belong to the invention.

| Sample | 4th layer | 2nd layer | 1st | 3rd | 5th | # layers |
|---|---|---|---|---|---|---|
| 1 | none | TPE | PVA | TPE | none | 3 |
| 2 | none | TPEE | PVA | TPEE | none | 3 |
| 3 | ionomer | TPEE | PVA | TPEE | ionomer | 5 |
| 4 | ionomer | TPE | PVA | TPE | ionomer | 5 |
| 5 | ionomer | TPU | PVA | TPU | ionomer | 5 |

(continued)

| Sample | 4th layer | 2nd layer | 1st | 3rd | 5th | # layers |
|---|---|---|---|---|---|---|
| 6 | copolymer | TPEE | PVA | TPEE | copolymer | 5 |
| 7 | copolymer | TPE | PVA | TPE | copolymer | 5 |
| 8 | copolymer | TPU | PVA | TPU | copolymer | 5 |
| 9 | TPE | TPU | PVA | TPU | TPE | 5 |
| 10 | TPEE | TPU | PVA | TPU | TPEE | 5 |
| 11 | none | PA6 | PVA | PA6 | none | 3 |
| 12 | none | TPE | EVOH | TPE | none | 3 |
| 13 | none | TPEE | EVOH | TPEE | none | 3 |
| 14 | TPE | TPU | EVOH | TPU | TPE | 5 |
| 15 | TPEE | TPU | EVOH | TPU | TPEE | 5 |
| 16 | none | PA6 | EVOH | PA6 | none | 3 |
| 17 | ionomer | TPEE | PVA | TPEE | none | 4 |
| 18 | ionomer | TPE | PVA | TPE | none | 4 |
| 19 | ionomer | TPU | PVA | TPU | none | 4 |
| 20 | copolymer | TPEE | PVA | TPEE | none | 4 |
| 21 | copolymer | TPE | PVA | TPE | none | 4 |
| 22 | copolymer | TPU | PVA | TPU | none | 4 |
| 23 | none | TPE | PVA | PA6 | none | 3 |
| 24 | none | TPEE | PVA | PA6 | none | 3 |
| 25 | none | PA6 | PVA | TPE | none | 3 |
| 26 | none | PA6 | PVA | TPEE | none | 3 |

As evidenced in Table 1, the number of layers may be at least 3. The number of layers may be even or odd. Preferably, the adaptive water vapour barrier 100 comprises from 3 to 5 layers, wherein each layer is made from different material(s) that a layer to which it is attached.

Preferably, the total thickness $d_1+d_2+d_3$ of the first, the second, and the third layers (110, 120, 130) of the adaptive water vapour barrier is from 15 $\mu$m to 60 $\mu$m. In case the adaptive water vapour barrier is a multilayer structure with more than three layers, the total thickness of the adaptive water vapour barrier is preferably from 15 $\mu$m to 60 $\mu$m. The layers can be made by extrusion and/or coextrusion, as will be detailed below. In an embodiment, the total thickness of all the extrudable layers of the adaptive water vapour barrier is from 15 $\mu$m to 60 $\mu$m.

Such a thickness has two effects. First, because of the lower limit of the thickness, the adaptive water vapour barrier is sufficiently watertight, as discussed elsewhere. This is because, preferably, at least one of the layers has been exteruded and/or is extrudable. Second, because of the upper limit of the thickness, the breathability (e.g. the $s_d$ value) of the film is sufficiently high for practical purposes. As for the watertightness of the surface layers (e.g. 120, 130) of the water vapour barrier 100, we refer to discussion elsewhere in this application. Herein the surface layer refers to the combination of such layers that are arranged on the same side of the first layer 110.

It has been noticed that with the aforementioned materials, such an adaptive barrier 100 has, at a temperature (T), and in a pressure (p), such as at the temperature T=23°C and in the pressure p = 1atm, a particularly suitable vapour diffusion resistance $s_d$. In such a case, the vapour diffusion resistance $s_d$ is at most 0.06 m for a first relative humidity $RH_1$ = 90 %, and at least 50 m for a second relative humidity $RH_2$ = 30 % as determined in the standard EN 12572. An example of such a vapour diffusion resistance $s_d$ is shown in Fig. 5, wherein the vapour diffusion thickness $s_d$ is shown as function of relative humidity and in the unit of cm.

In an embodiment, both the second layer 120 and the third layer 130 are watertight. This has the effect that in that case, the first layer 110 is protected from being exposed to liquid water. The material of the first layer 110 may be water soluble to some extent. Thus, protection from water is preferable. In some embodiments, the material selection and the proper thickness results in sufficient water resistance. In addition or alternatively, the second layer 120 may be at least water resistant as class W1 materials or coverings of the standard DIN EN 13111. The third layer 130 may be resistant to water at least to the same extent as the second layer 120.

In an embodiment, all such layers of the water vapour barrier, that are left on a first side of the first layer 110, in combination, are at least water resistant as class W1 materials or coverings of the standard DIN EN 13111. In an embodiment, all such layers of the water vapour barrier, that are left on a second side of the first layer 110, the second side being opposite to the first side, in combination, are at least water resistant as class W1 materials or coverings of the standard DIN EN 13111.

In an embodiment, the soft blocks of the third layer 130 comprise the same monomers as the soft blocks of the second layer 120. In an embodiment, the hard blocks of the third layer 130 comprise the same monomers as the hard blocks of the second layer 120. In an embodiment, the third layer 130 is made of the same material as the second layer 120.

Coextrusion and/or casting and/or bonding and/or coating may be used as techniques for manufacturing the multilayer adaptive vapour barrier 100. Manufacturing may comprise at least one of:

- coextruding at least two of the layers (110, 120, 130, and optionally the other layer) simultaneously,
- coating a casted layer (110, 120, or 130) or a preformed bi-layer film ([110, 120]; [110, 130]) or multilayer film ([110, 120, 130]) by extruding a layer (120, 130, 110, 140, 150) onto said casted layer (110, 120, or 130) or bi-layer film ([110, 120]; [110, 130]), or multilayer film ([110, 120, 130]) and/or
- bonding a casted layer (120, 130, 110, 140, 150) to another casted layer (110, 120, or 130), to a preformed bi-layer structure ([110, 120]; [110, 130]), or to a preformed multilayer structure ([110, 120]; [110, 130]), e.g. using some adhesive, ultrasonic bonding, or heating.

The aforementioned bi-layer film (e.g. [110, 120]; [110, 130]) comprises two of the layers (e.g. 110 and 120; or 110 and 130); and the aforementioned multilayer film comprises multiple (at least three) layers. The bi-layer or multilayer film may have been made by

- coextruding the two layers,
- coating a casted layer (e.g. coating the second layer 120 onto a casted film, the film being the first layer 110), or
- bonding two casted layers together, e.g. using some adhesive, ultrasonic bonding, or heating.

When a structure having more than three layer is being made, a multilayer structure, e.g. [110, 120, 130] may be coated with a fourth (or other subsequent) layer, or a film may be bonded onto such structure. In addition or alternatively two bi-layer or multilayer structures may be bonded together.

The adaptive water vapour barrier 100 may, as such, be mechanically insufficiently sturdy for some applications. Thus, the adaptive water vapour barrier may be attached to a first support 210.

Referring to Figs. 6a-6d a water vapour control sheet 200 comprises an adaptive water vapour barrier 100 (as discussed above) and a first support 210 (Figs. 6a and 6b). The water vapour barrier 100 is arranged on one side of the first support 210 and connected thereto. The barrier 100 may be connected directly to the support 210, or via a further support structure 230, such as a scrim (see Fig. 6d).

An embodiment of the water vapour control sheet 200 comprises a second support 220 (Figs. 6c and 6d). The water vapour barrier 100 is arranged in between the first support 210 and the second support 220. A water vapour control sheet 200 may comprise a further support structure 230 (Fig. 6d). A water vapour control sheet 200 may comprise a further support structure 230, even if it comprises a support 210 only on one side (not shown).

The thickness $d_{s1}$ of the first support 210, which is parallel to the first thickness $d_1$, may be e.g. from 30 $\mu$m to 150 $\mu$m. This typically ensures sufficient sturdiness of the support 210. Preferably, the support 210 does not significantly alter the diffusive properties of the water vapour barrier 100. Preferably, the water vapour diffusion thickness $s_d$ of the support 210 is less than the water vapour diffusion thickness $s_d$ of the water vapour barrier 100. Preferably, the water vapour diffusion thickness $s_d$ of the support 210 is less than the water vapour diffusion thickness $s_d$ of the water vapour barrier 100 at the temperature 23 °C, in the pressure 1 atm, and at all relative humidities (0% to 100%). In addition or alternatively, the water vapour diffusion thickness $s_d$ of the support 210 may be e.g. less than 0.05 m. These may apply e.g. at the temperature 23 °C, in the pressure 1 atm, and at the relative humidity 60 %. These considerations preferably apply also to the second support 220, and the further support structure 230, if present.

The first support 210 may comprise at least one of

- fibrous polypropylene (PP), non-woven or fabrics,
- fibrous polyethylene terephthalate (PET), non-woven or fabrics,
- fibrous polyethylene (PE), non-woven or fabrics,
- fibrous two- or multicomponent materials, non-woven or fabrics, such as PP/PET, PE/PP, PE/PET, or PE/PP/PET fibrous material,
- glass fiber felt or fabric,
- textile comprising at least one of polypropylene, polyethylene terephthalate, and polyethylene,
- paper,
- a perforated film comprising at least one of polypropylene, polyethylene terephthalate, and polyethylene, and
- a supporting scrim comprising at least one of glass, polypropylene, and polyethylene terephthalate.

In contrast to the extrudable materials of the adaptive water vapour barrier 100, the support comprises materials in different form, such as fibrous material. Moreover, even if a film can be extruded, a perforated film need also to be perforated. Thus, a perforated film is not extrudable.

An embodiment of the water vapour control sheet 200 comprises a second support 200, wherein the water vapour barrier 100 is connected to the second support 220 in such a way that the barrier 100 is arranged in between the first support 210 and the second support 220. The thickness $d_{s2}$, which is parallel to the first thickness $d_1$, of the second support 220 may be from 30 $\mu$m to 150 $\mu$m. The second support 220 may comprise at least one of the materials mentioned for the first support 210.

If present, the further support structure 230 may comprise a supporting scrim. The scrim may comprise at least one of glass fibres, polypropylene fibres, and polyethylene terephthalate fibres. The scrim 230 may be arranged in between the first support 210 and the barrier 100. Another scrim may be may be arranged in between the second support 220 and the barrier 100, if the control sheet 200 comprises the second support 220.

In an embodiment, the the water vapour control sheet is at least as watertight as class W1 materials of a standard DIN EN 13111. The latest version of the standard (as available on April 1st 2015) is being referred to. The watertightness is affected by the selection of the materials and their thicknesses. Guidelines are given above.

In an embodiment, the the water vapour control sheet is at least as fire resistant as class E materials of a standard EN 13501-1. The latest version of the standard (as available on April 1st 2015) is being referred to. The fire resistance can be improved by adding fire retardants, as known in the art. Preferably the fire retardants are applied to the support (210, 220, 230). Preferably the fire retardants are applied only to the support (210, 220, 230).

Referring to Figs. 7 and 8, the adaptive water vapour barrier 100 or the water vapour control sheet 200 can be used in a thermal insulation element arrangement 300. The insulation element arrangement 300 can be used in between an outer wall 420 of a building and an inner wall 410 of a building.

The adaptive water vapour barrier 100 or the water vapour control sheet 200 can be used e.g. in between a layer of first thermally insulating material 310 and a layer of second thermally insulating material 320 (see Fig. 6). The first and the second thermally insulating materials 310, 320 may be the same materials or different materials. The layers of the first and the second thermally insulating materials 310, 320 are arranged in between the outer wall 420 of a building and the inner wall 410 of a building. The layer of the first second thermally insulating material 310 may constitute a first thermal insulation element 310. The layer of the second thermally insulating material 320 may constitute a second thermal insulation element 320. The layers 310, 320 and the adaptive water vapour barrier 100 or the water vapour control sheet 200 may be used in the form of a thermal insulation element arrangement 300.

A material is thermally insulating material, when the thermal conductivity of the material is at most 0.05 W/mK or at most 0.04 W/mK according to the standard EN 12667 (referring to the most recent version available on April 1st 2015). The layer of the first thermally insulating material 310 has a thickness $d_{t1}$ and the layer of the second thermally insulating material 320 has a thickness $d_{t2}$. Preferably, the total thickness ($d_{t1}+d_{t2}$) of the thermally insulating layers is parallel to the thickness $d_1$ of the first layer 110 and at least 100 mm.

When used in such a way, a corresponding building comprises

- an outer wall 420 and an inner wall 410,
- a layer of first thermally insulating material 310, and a layer of second thermally insulating material 320, the layers 310, 320 being arranged in between the walls 410, 420,
- the adaptive water vapour barrier the water vapour control sheet as discussed above, arranged in between the layers of thermally insulating material 310, 320.

As for the definition of thermally insulating material, see above. The layer of the first thermally insulating material 310 has a thickness $d_{t1}$ and the layer of the second thermally insulating material 320 has a thickness $d_{t2}$, both thicknesses parallel to the thickness $d_1$ of the first layer 110. Preferably, the total thickness ($d_{t1}+d_{t2}$) of the thermally insulating layers 310, 320 is at least 100 mm.

**Claims**

1. An adaptive water vapour barrier (100) comprising

   - a first layer (110)

      • comprising a first side and an opposite second side,
      • having a first thickness ($d_1$) that is left in between the first side and the second side, wherein the first thickness is from 2 $\mu$m to 25 $\mu$m, and
      • comprising polyvinyl alcohol (PVA),

   - a second layer (120)

      • arranged on the first side of the first layer (110) and connected to the first layer (110),
      • having a second thickness ($d_2$) that is parallel to the first thickness ($d_1$), wherein the second thickness ($d_2$) is from 2 $\mu$m to 17 $\mu$m, and
      • comprising at least one of thermoplastic elastomer (TPE), thermoplastic polyester elastomer (TPEE), thermoplastic polyurethane (TPU), and polyamide (PA), and

   - a third layer (130),

      • arranged on the second side of the first layer (110) and connected to the first layer (110),
      • having a third thickness ($d_3$) that is parallel to the first thickness ($d_1$), wherein the third thickness ($d_3$) is from 2 $\mu$m to 17 $\mu$m, and
      • comprising at least one of thermoplastic elastomer (TPE), thermoplastic polyester elastomer (TPEE), thermoplastic polyurethane (TPU), and polyamide (PA).

2. The adaptive water vapour barrier (100) of claim 1 , wherein

   - the total thickness of the adaptive water vapour barrier (100) is from 15 $\mu$m to 60 $\mu$m, whereby
   - the vapour diffusion thickness ($s_d$) of the water vapour barrier (100) is, at a temperature (T), and in a pressure (p), such as at the temperature T=23 °C and in the pressure p = 1atm,

      • for a first relative humidity ($RH_1$) of 90 %, at most 0.06 m and
      • for a second relative humidity ($RH_2$) of 30 %, at least 50 m, wherein

   - the vapour diffusion thickness ($s_d$) of the water vapour barrier (100) is measured according to standard EN ISO 12572 (2001).

3. The adaptive water vapour barrier (100) of the claim 1 or 2, wherein

   - the second layer (120) comprises at least one of thermoplastic elastomer (TPE), thermoplastic polyester elastomer (TPEE), and thermoplastic polyurethane (TPU) or
   - the third layer (130) comprises at least one of thermoplastic elastomer (TPE), thermoplastic polyester elastomer (TPEE), and thermoplastic polyurethane (TPU).

4. The adaptive water vapour barrier (100) of any of the claims 1 to 3, wherein at least one of the second layer (120) and the third layer (130) comprises

   - polymer material comprising soft blocks and hard blocks in such a way that
   - the soft blocks constitute from 10 w% to 60 w% of the polymer material.

5. The adaptive water vapour barrier (100) of the claim 4, wherein

   - the soft blocks comprise polyether soft segments, such as poly (tetramethylene oxide) glycol (PTMO), and/or
   - the hard blocks comprise poly (buthylene terephthalate) (PBT).

6. The adaptive water vapour barrier (100) of any of the claims 1 to 5, wherein

- a material for the first layer (110) is selected in such a way that a layer of the material of the first layer (110) as such has

  • a first primary oxygen transmission rate ($OTR_{11}$) at a temperature (T), in a pressure (p), and at a first relative humidity ($RH_1$) of $RH_1$=90%, and
  • a first secondary oxygen transmission rate ($OTR_{12}$) at the temperature (T) in the pressure (p), and at a second relative humidity ($RH_2$) of $RH_2$=30%, wherein
  • the ratio of the first primary oxygen transmission rate ($OTR_{11}$) to the first secondary oxygen transmission rate ($OTR_{12}$), $OTR_{11}/OTR_{12}$, is at least 40 or at least 5000, wherein

- the oxygen transmission rates ($OTR_{11}$, $OTR_{12}$) are measured according to the standard ASTM D1434.

7. The adaptive water vapour barrier (100) of any of the claims 1 to 6, wherein

  - a material for the first layer (110) is selected in such a way that a layer of the material of the first layer as such has

    • a first primary water vapour transmission rate ($WVTR_{11}$) at a temperature (T), in a pressure (p), and at a first relative humidity ($RH_1$) of $RH_1$=90%, and
    • a first secondary water vapour transmission rate ($WVTR_{12}$) at the temperature (T) in the pressure (p), and at a second relative humidity ($RH_2$) of $RH_2$=30%, wherein
    • the ratio of the first primary water vapour transmission rate ($WVTR_{11}$) to the first secondary water vapour transmission rate ($WVTR_{12}$), $WVTR_{11}/WVTR_{12}$, is at least 3 or at least 70, wherein

  - the water vapour transmission rates ($WVTR_1$, $WVTR_{12}$) are measured according to the standard EN-ISO 12572 (version 12572:2001).

8. The adaptive water vapour barrier (100) of any of the claims 1 to 7, wherein

  - a polymer material of the second layer (120) as such has

    • a second primary vapour resistance factor ($\mu_{21}$) at a temperature (T) of T=23°C, in a pressure (p), and at a first relative humidity ($RH_1$) of $RH_1$=90%,
    • a second secondary vapour resistance factor ($\mu_{22}$) at the temperature (T) of T=23°C, in the pressure (p), and at a second relative humidity ($RH_2$) of $RH_2$=30%, in such a way that

      - both the second primary vapour resistance factor ($\mu_{21}$) and the second secondary vapour resistance factor ($\mu_{22}$) are less than 5000, wherein

  - the vapour resistance factors ($\mu_{21}$, $\mu_{22}$) are defined as the ratio of vapour diffusion thickness ($s_d$) and the thickness (d) of the corresponding layer, wherein the vapour diffusion thickness ($s_d$) is measured according to the standard EN ISO 12572 (2001).

9. The adaptive water vapour barrier (100) of any of the claims 1 to 8, wherein

  - a polymer material of the second layer (120) as such has

    • a second primary vapour resistance factor ($\mu_{21}$) at a temperature (T) of T=23°C, in a pressure (p), and at a first relative humidity ($RH_1$) of $RH_1$=90%,
    • a second secondary vapour resistance factor ($\mu_{22}$) at the temperature (T) of T=23°C, in the pressure (p), and at a second relative humidity ($RH_2$) of $RH_2$=30%, in such a way that

      - the ratio of the second secondary vapour resistance factor ($\mu_{22}$) to the second primary vapour resistance factor ($\mu_{21}$), $\mu_{22}/\mu_{21}$, is at most 18, wherein

  - the vapour resistance factors ($\mu_{21}$, $\mu_{22}$) are defined as the ratio of vapour diffusion thickness ($s_d$) and the thickness (d) of the corresponding layer, wherein the vapour diffusion thickness ($s_d$) is measured according to the standard EN ISO 12572 (2001).

**10.** The adaptive water vapour barrier (100) of any of the claims 1 to 9, further comprising

- at least a fourth layer (140) made of polymer material, the fourth layer (140) being connected to the first layer (110),
- the fourth layer (140) comprising at least one of

  • thermoplastic elastomer (TPE)
  • thermoplastic polyester elastomer (TPEE),
  • thermoplastic polyurethane (TPU),
  • an ionomer,
  • ethyl vinyl alcohol (EVOH),
  • polyamide (PA), such as polyamide-6 (PA6),
  • ethyl vinyl acetate (EVA), and
  • ethyl methacrylate (EMA), wherein the methacrylate (MA) content is from 17 w% to 35 w%,

wherein
- the fourth layer (140) is arranged in between the first layer (110) and one of the second layer (120) and the third layer (130) or
- the first layer (110), the second layer (120), and the third layer (130) are arranged on the same side of the fourth layer (140).

**11.** The adaptive water vapour barrier (100) any of the claims 1 to 10, wherein

- the second layer (120) is at least as watertight as class W1 materials or sheets of the standard DIN EN 13111, and
- the third layer (130) is at least as watertight as class W1 materials or sheets of the standard DIN EN 13111.

**12.** A water vapour control sheet (200), comprising

- the adaptive water vapour barrier (100) according to any of the claims 1 to 11 and
- a first support (210), wherein
- the adaptive water vapour barrier (100) is connected to the first support (210), and
- the first support (210) has a thickness ($d_{s1}$) that is parallel to the first thickness ($d_1$), and the thickness ($d_{s1}$) of the first support (210) is from 30 $\mu$m to 150 $\mu$m.

**13.** The water vapour control sheet (200) of the claim 12, wherein

- the water vapour control sheet is at least as watertight as class W1 materials or sheets of a standard DIN EN 13111 and
- the water vapour control sheet is at least as fire resistant as class E materials or sheets of a standard EN 13501 -1

**14.** A building comprising

- the adaptive water vapour barrier (100) of any of the claims 1 to 11 or a water vapour control sheet (200) of any of the claims 12 to 13,
- a layer of first thermally insulating material (310),
- a layer of second thermally insulating material (320),
- an outer wall (420), and
- an inner wall (410), wherein

the adaptive water vapour barrier (100) of any of the claims 1 to 11 or the water vapour control sheet (200) of any of the claims 12 to 13 is arranged in between the layer of first thermally insulating material (310) and the layer of second thermally insulating material (320),

- the layer of first thermally insulating material (310) and the layer of second thermally insulating material (320) are arranged in between the outer wall (420) and the inner wall (410),
- the thermal conductivity of the first and/or the second thermally insulating material (310, 320) is at most 0.05 W/mK according to the standard EN 12667, and
- the total thickness ($d_{t1}+d_{t2}$) of the layers of thermally insulating materials (310, 320) is parallel to the first

thickness ($d_1$) and at least 50 mm.

15. Use of

- the adaptive water vapour barrier (100) of any of the claims 1 to 11 or the water vapour control sheet (200) of any of the claims 12 to 13, as a water vapour barrier, the use comprising
- arranging the adaptive water vapour barrier (100) of any of the claims 1 to 11 or the water vapour control sheet (200) of any of the claims 12 to 13 in between a layer of first thermally insulating material (310) and a layer of second thermally insulating material (320) and
- arranging the layer of first thermally insulating material (310) and the layer of second thermally insulating material (320) in between an outer wall (420) and an inner wall (410) of a building, wherein
- the thermal conductivity of the first and/or the second thermally insulating material (310, 320) is at most 0.05 W/mK according to the standard EN 12667, and
- the total thickness ($d_{t1}+d_{t2}$) of the layers of thermally insulating materials (310, 320) is parallel to the first thickness ($d_1$) and at least 50 mm.

**Patentansprüche**

1. Adaptive Wasserdampfsperre (100), umfassend:

- eine erste Schicht (110)

• mit einer ersten Seite und einer gegenüberliegenden zweiten Seite,
• mit einer ersten Dicke ($d_1$), befindlich zwischen der ersten Seite und der zweiten Seite, wobei die erste Dicke von 2 $\mu$m bis 25 $\mu$m beträgt, und
• umfassend Polyvinylalkohol (PVA),

- eine zweite Schicht (120),

• angeordnet auf der ersten Seite der ersten Schicht (110) und verbunden mit der ersten Schicht (110),
• mit einer zweiten Dicke ($d_2$), befindlich parallel zur ersten Dicke ($d_1$), wobei die zweite Dicke ($d_2$) von 2 $\mu$m bis 17 $\mu$m beträgt, und
• umfassend mindestens eine aus thermoplastischem Elastomer (TPE), thermoplastischem Polyesterelastomer (TPE-E), thermoplastischem Polyurethan (TPU) und Polyamid (PA), und

- eine dritte Schicht (130),

• angeordnet auf der zweiten Seite der ersten Schicht (110) und verbunden mit der ersten Schicht (110),
• mit einer dritten Dicke ($d_3$), befindlich parallel zur ersten Dicke ($d_1$), wobei die dritte Dicke ($d_3$) von 2 $\mu$m bis 17 $\mu$m beträgt, und
• umfassend mindestens eine aus thermoplastischem Elastomer (TPE), thermoplastischem Polyesterelastomer (TPE-E), thermoplastischem Polyurethan (TPU) und Polyamid (PA).

2. Adaptive Wasserdampfsperre (100) nach Anspruch 1, wobei

- die Gesamtdicke der adaptiven Wasserdampfsperre (100) von 15 $\mu$m bis 60 $\mu$m beträgt und
- die Dampfdiffusionsdicke ($s_d$) der Wasserdampfsperre (100) bei einer Temperatur (T) und einem Druck (p) der Temperatur T=23 °C und dem Druck p = 1 atm entspricht,

• bei einer ersten relativen Luftfeuchtigkeit ($RH_1$) von 90% bei höchstens 0,06 m und
• bei einer zweiten relativen Luftfeuchtigkeit ($RH_2$) von 30% bei mindestens 50 m und

- die Dampfdiffusionsdicke ($s_d$) der Wasserdampfsperre (100) nach der Norm EN ISO 12572 (2001) gemessen wird.

3. Adaptive Wasserdampfsperre (100) nach Anspruch 1 oder 2, wobei

- die zweite Schicht (120) mindestens eine aus thermoplastischem Elastomer (TPE), thermoplastischem Polyesterelastomer (TPE-E) und thermoplastischem Polyurethan (TPU) oder
- die dritte Schicht (130) mindestens eine aus thermoplastischem Elastomer (TPE), thermoplastischem Polyesterelastomer (TPE-E) und thermoplastischem Polyurethan (TPU) umfasst.

4. Adaptive Wasserdampfsperre (100) nach einem der Ansprüche 1 bis 3, wobei mindestens eine der zweiten Schicht (120) und der dritten Schicht (130)

- Polymermaterial mit weichen Blöcken und harten Blöcken umfasst, derart, dass
- die weichen Blöcke von 10 Gew.-% bis 60 Gew.-% des Polymermaterials ausmachen.

5. Adaptive Wasserdampfsperre (100) nach Anspruch 4, wobei

- die weichen Blöcke weiche Segmente aus Polyether wie Poly(tetramethylen-oxid)glykol (PTMO), und/oder
- die harten Blöcke Poly(buthylenterephthalat) (PBT) enthalten.

6. Adaptive Wasserdampfsperre (100) nach einem der Ansprüche 1 bis 5, wobei

- ein Material für die erste Schicht (110) so ausgewählt wird, dass eine Schicht des Materials der ersten Schicht (110) als solche

• eine erste primäre Sauerstoffdurchlässigkeitsrate ($OTR_{11}$) bei einer Temperatur (T), einem Druck (p) und einer ersten relativen Luftfeuchtigkeit ($RH_1$) von $RH_1=90\%$, und
• eine erste sekundäre Sauerstoffdurchlässigkeitsrate ($OTR_{12}$) bei der Temperatur (T), dem Druck (p) und einer zweiten relativen Luftfeuchtigkeit ($RH_2$) von $RH_2=30\%$ aufweist, wobei
• das Verhältnis der ersten primären Sauerstoffdurchlässigkeitsrate ($OTR_{11}$) zur ersten sekundären Sauerstoffdurchlässigkeitsrate ($OTR_{12}$), $OTR_{11}/OTR_{12}$ mindestens 40 oder mindestens 5.000 beträgt und

- die Sauerstoffdurchlässigkeitsrate ($OTR_{11}$, $OTR_{12}$) nach der Norm ASTM D1434 gemessen wird.

7. Adaptive Wasserdampfsperre (100) nach einem der Ansprüche 1 bis 6, wobei

- ein Material für die erste Schicht (110) so ausgewählt wird, dass eine Schicht des Materials der ersten Schicht als solche

• eine erste primäre Wasserdampfdurchlässigkeitsrate ($WVTR_{11}$) bei einer Temperatur (T), einem Druck (p) und einer ersten relativen Luftfeuchtigkeit ($RH_1$) von $RH_1=90\%$, und
• eine erste sekundäre Wasserdampfdurchlässigkeitsrate ($WVTR_{12}$) bei der Temperatur (T), dem Druck (p) und einer zweiten relativen Luftfeuchtigkeit ($RH_2$) von $RH_2=30\%$ aufweist, wobei
• das Verhältnis der ersten primären Wasserdampfdurchlässigkeitsrate ($WVTR_{11}$) zur ersten sekundären Wasserdampfdurchlässigkeitsrate ($WVTR_{12}$) $WVTR_{11}/WVTR_{12}$ mindestens 3 oder mindestens 70 beträgt und

- die Wasserdampfdurchlässigkeitsrate ($WVTR_{11}$, $VTR_{12}$) nach der Norm EN-ISO 12572 (Version 12572:2001) gemessen wird.

8. Adaptive Wasserdampfsperre (100) nach einem der Ansprüche 1 bis 7, wobei

- ein Polymermaterial der zweiten Schicht (120) als solche

• einen zweiten primären Dampfwiderstandsfaktor ($\mu_{21}$) bei einer Temperatur (T) von T=23 °C, einem Druck (p) und einer ersten relativen Luftfeuchtigkeit ($RH_1$) von $RH_1=90\%$,
• einen zweiten sekundären Dampfwiderstandsfaktor ($\mu_{22}$) bei der Temperatur (T) von T=23 °C, dem Druck (p) und einer zweiten relativen Luftfeuchtigkeit ($RH_2$) von $RH_2=30\%$ aufweist, derart, dass

- sowohl der zweite primäre Dampfwiderstandsfaktor ($\mu_{21}$) als auch der zweite sekundäre Dampfwiderstandsfaktor ($\mu_{22}$) kleiner als 5.000 sind, wobei

- die Dampfwiderstandsfaktoren ($\mu_{21}$, $\mu_{22}$) definiert werden als das Verhältnis der Dampfdiffusionsdicke ($s_d$) zur Dicke (d) der entsprechenden Schicht und die Dampfdiffusionsdicke ($s_d$) nach der Norm EN ISO 12572 (2001) gemessen wird.

9. Adaptive Wasserdampfsperre (100) nach einem der Ansprüche 1 bis 8, wobei

- ein Polymermaterial der zweiten Schicht (120) als solche

• einen zweiten primären Dampfwiderstandsfaktor ($\mu_{21}$) bei einer Temperatur (T) von T=23 °C, einem Druck (p) und einer ersten relativen Luftfeuchtigkeit ($RH_1$) von $RH_1$=90%,
• einen zweiten sekundären Dampfwiderstandsfaktor ($\mu_{22}$) bei der Temperatur (T) von T=23 °C, dem Druck (p) und einer zweiten relativen Luftfeuchtigkeit ($RH_2$) von $RH_2$ =30% aufweist, derart, dass

- das Verhältnis des zweiten sekundären Dampfwiderstandsfaktors ($\mu_{22}$) zum zweiten primären Dampfwiderstandsfaktor ($\mu_{21}$) $\mu_{22}/\mu_{21}$ höchstens 18 beträgt, wobei

- die Dampfwiderstandsfaktoren ($\mu_{21}$, $\mu_{22}$) definiert werden als das Verhältnis der Dampfdiffusionsdicke ($s_d$) zur Dicke (d) der entsprechenden Schicht und die Dampfdiffusionsdicke ($s_d$) nach der Norm EN ISO 12572 (2001) gemessen wird.

10. Adaptive Wasserdampfsperre (100) nach einem der Ansprüche 1 bis 9, ferner umfassend:

- mindestens eine vierte Schicht (140) aus Polymermaterial, wobei die vierte Schicht (140) mit der ersten Schicht (110) verbunden ist,
- die vierte Schicht (140) mindestens eine umfasst aus

• thermoplastischem Elastomer (TPE)
• thermoplastischem Polyesterelastomer (TPE-E),
• thermoplastischem Polyurethan (TPU),
• einem Ionomer,
• Ethylvinylalkohol (EVOH),
• Polyamid (PA), wie Polyarnid-6 (PA6),
• Ethylvinylacetat (EVA) oder
• Ethylmethacrylat (EMA) und der Gehalt an Methacrylat (MA) 17 Gew.-% bis 35 Gew.-% beträgt,

wobei
- die vierte Schicht (140) zwischen der ersten Schicht (110) und entweder der zweiten Schicht (120) oder der dritten Schicht (130) angeordnet ist oder
- die erste Schicht (110), die zweite Schicht (120) und die dritte Schicht (130) auf derselben Seite wie die vierte Schicht (140) angeordnet sind.

11. Adaptive Wasserdampfsperre (100) nach einem der Ansprüche 1 bis 10, wobei

- die zweite Schicht (120) mindestens so wasserdicht ist wie Materialien oder Bahnen der Klasse W1 der Norm DIN EN 13111, und
- die dritte Schicht (130) mindestens so wasserdicht ist wie Materialien oder Bahnen der Klasse W1 der Norm DIN EN 13111.

12. Wasserdampfdichtungsbahn (200), umfassend

- die adaptive Wasserdampfsperre (100) nach einem der Ansprüche 1 bis 11 und
- einen ersten Träger (210), wobei
- die adaptive Wasserdampfsperre (100) mit dem ersten Träger (210) verbunden ist und
- der erste Träger (210) eine Dicke ($d_{s1}$) hat, befindlich parallel zur ersten Dicke ($d_1$), und die Dicke ($d_{s1}$) des ersten Trägers (210) von 30 $\mu$m bis 150 $\mu$m beträgt.

13. Wasserdampfdichtungsbahn (200) nach Anspruch 12, wobei

- die Wasserdampfdichtungsbahn mindestens so wasserdicht ist wie Materialien oder Bahnen der Klasse W1 nach der Norm DIN EN 13111 und
- die Wasserdampfdichtungsbahn mindestens so schwer entflammbar ist wie Materialien oder Bahnen der Klasse E nach der Norm EN 13501-1.

**14.** Ein Gebäude, umfassend

- die adaptive Wasserdampfsperre (100) nach einem der Ansprüche 1 bis 11 oder eine Wasserdampfdichtungsbahn (200) nach einem der Ansprüche 12 bis 13,
- eine Schicht aus erstem wärmeisolierendem Material (310),
- eine Schicht aus zweitem wärmeisolierendem Material (320),
- eine Außenwand (420) und
- eine Innenwand (410), wobei

die adaptive Wasserdampfsperre (100) nach einem der Ansprüche 1 bis 11 oder die Wasserdampfdichtungsbahn (200) nach einem der Ansprüche 12 bis 13 zwischen der Schicht des ersten wärmeisolierenden Materials (310) und der Schicht des zweiten wärmeisolierenden Materials (320),

- die Schicht des ersten wärmeisolierenden Materials (310) und die Schicht des zweiten wärmeisolierenden Materials (320) zwischen der Außenwand (420) und der Innenwand (410) angeordnet sind,
- die Wärmeleitfähigkeit des ersten und/oder des zweiten wärmeisolierenden Materials (310, 320) nach der Norm EN 12667 höchstens 0,05 W/mK beträgt, und
- die Gesamtdicke ($d_{t1}$+$d_{t2}$) der Schichten aus wärmeisolierenden Materialien (310, 320) im Vergleich zur ersten Dicke ($d_1$) mindestens 50 mm beträgt.

**15.** Verwendung

- der adaptiven Wasserdampfsperre (100) nach einem der Ansprüche 1 bis 11 oder der Wasserdampfdichtungsbahn (200) nach einem der Ansprüche 12 bis 13 als Wasserdampfsperre, wobei die Verwendung umfasst:
- Anordnen der adaptiven Wasserdampfsperre (100) nach einem der Ansprüche 1 bis 11 oder der Wasserdampfdichtungsbahn (200) nach einem der Ansprüche 12 bis 13 zwischen einer Schicht aus erstem wärmeisolierendem Material (310) und einer Schicht aus zweitem wärmeisolierendem Material (320), und
- Anordnen der Schicht des ersten wärmeisolierenden Materials (310) und der Schicht des zweiten wärmeisolierenden Materials (320) zwischen einer Außenwand (420) und einer Innenwand (410) in einem Gebäude, wobei
- die Wärmeleitfähigkeit des ersten und/oder des zweiten wärmeisolierenden Materials (310, 320) nach der Norm EN 12667 höchstens 0,05 W/mK beträgt und
- die Gesamtdicke ($d_{t1}$+$d_{t2}$) der Schichten aus wärmeisolierenden Materialien (310, 320) im Vergleich zur ersten Dicke ($d_1$) mindestens 50 mm beträgt.

**Revendications**

**1.** Pare-vapeur adaptatif (100), comprenant

- une première couche (110)

  • comprenant un premier côté et un deuxième côté opposé,
  • présentant une première épaisseur ($d_1$) qui est laissée entre le premier côté et le deuxième côté, dans lequel la première épaisseur est comprise entre 2 $\mu$m et 25 $\mu$m, et
  • comprenant de l'alcool polyvinylique (PVA),

- une deuxième couche (120)

  • agencée sur le premier côté de la première couche (110) et raccordée à la première couche (110),
  • présentant une deuxième épaisseur ($d_2$) qui est parallèle à la première épaisseur ($d_1$), dans lequel la deuxième épaisseur ($d_2$) est comprise entre 2 $\mu$m et 17 $\mu$m, et
  • comprenant au moins un parmi un élastomère thermoplastique (TPE), un élastomère polyester thermoplastique (TPEE), un polyuréthane thermoplastique (TPU), et un polyamide (PA), et

- une troisième couche (130),

  • agencée sur le deuxième côté de la première couche (110) et raccordée à la première couche (110),
  • présentant une troisième épaisseur ($d_3$) qui est parallèle à la première épaisseur ($d_1$), dans lequel la troisième épaisseur ($d_3$) est comprise entre 2 $\mu$m et 17 $\mu$m, et
  • comprenant au moins un parmi un élastomère thermoplastique (TPE), un élastomère polyester thermoplastique (TPEE), un polyuréthane thermoplastique (TPU), et un polyamide (PA).

2. Pare-vapeur adaptatif (100) selon la revendication 1, dans lequel

   - l'épaisseur totale du pare-vapeur adaptatif (100) est comprise entre 15 $\mu$m et 60 $\mu$m, grâce à quoi
   - l'épaisseur de diffusion de vapeur ($S_d$) du pare-vapeur (100) est, pour une température (T) et pour une pression (p), par exemple à la température T = 23°C et à la pression p = 1atm,

     • pour une première humidité relative ($RH_1$) de 90 %, d'au moins 0,06 m et
     • pour une deuxième humidité relative ($RH_2$) de 30 %, d'au moins 50 m, dans lequel

   - l'épaisseur de diffusion de vapeur ($S_d$) du pare-vapeur (100) est mesurée selon la norme EN ISO 12572 (2001).

3. Pare-vapeur adaptif (100) selon la revendication 1 ou 2, dans lequel

   - la deuxième couche (120) comprend au moins un élastomère thermoplastique (TPE), un élastomère polyester thermoplastique (TPEE), et un polyuréthane thermoplastique (TPU), ou
   - la troisième couche (130) comprend au moins un parmi un élastomère thermoplastique (TPE), un élastomère polyester thermoplastique (TPEE), et un polyuréthane thermoplastique (TPU).

4. Pare-vapeur adaptatif (100) selon l'une quelconque des revendications 1 à 3, dans lequel au moins une parmi la deuxième couche (120) et la troisième couche (130) comprend

   - un matériau polymère comprenant des blocs tendres et des blocs durs de telle manière que
   - les blocs tendres constituent entre 10 % en poids et 60 % en poids du matériau polymère.

5. Pare-vapeur adaptatif (100) selon la revendication 4, dans lequel

   - les blocs tendres comprennent des segments tendres de polyéther, par exemple en poly(oxyde de tétraméthylène)glycol (PTMO), et/ou
   - les blocs durs comprennent du poly(téréphtalate de butylène) (PBT).

6. Pare-vapeur adaptatif (100) selon l'une quelconque des revendications 1 à 5, dans lequel

   - un matériau destiné à la première couche (110) est sélectionné de telle manière qu'une couche du matériau de la première couche (110) en tant que telle présente

     • un premier taux primaire de transmission à l'oxygène ($OTR_{11}$) pour une température (T), pour une pression (p), et pour une première humidité relative ($RH_1$) de $RH_1$ = 90 %, et
     • un premier taux secondaire de transmission à l'oxygène ($OTR_{12}$) pour la température (T), pour la pression (p), et pour une deuxième humidité relative ($RH_2$) de $RH_2$ = 30 %, dans lequel
     • le rapport du premier taux primaire de transmission à l'oxygène ($OTR_{11}$) sur le premier taux secondaire de transmission à l'oxygène ($OTR_{12}$), $OTR_{11}/OTR_{12}$, est supérieur ou égal à 40 ou supérieur ou égal à 5000, dans lequel

   - les taux de transmission à l'oxygène ($OTR_{11}$, $OTR_{12}$) sont mesurés selon la norme ASTM D1434.

7. Pare-vapeur adaptatif (100) selon l'une quelconque des revendications 1 à 6, dans lequel

   - un matériau destiné à la première couche (110) est sélectionné de telle manière qu'une couche du matériau de la première couche en tant que telle présente

• un premier taux primaire de transmission à la vapeur d'eau (WVTR$_{11}$) pour une température (T), pour une pression (p), et pour une première humidité relative (RH$_1$) de RH$_1$ = 90 %, et
• un premier taux secondaire de transmission à la vapeur d'eau (WVTR$_{12}$) pour la température (T), pour la pression (p), et pour une deuxième humidité relative (RH$_2$) de RH$_2$ = 30 %, dans lequel
• le rapport du premier taux primaire de transmission à la vapeur d'eau (WVTR$_{11}$) sur le premier taux secondaire de transmission à la vapeur d'eau (WVTR$_{12}$), WVTR$_{11}$/WVTR$_{12}$, est supérieur ou égal à 3 ou supérieur ou égal à 70, dans lequel

- les taux de transmission à la vapeur d'eau (WVTR$_{11}$, WVTR$_{12}$) sont mesurés selon la norme EN-ISO 12572 (version 12572:2001).

**8.** Pare-vapeur adaptatif (100) selon l'une quelconque des revendications 1 à 7, dans lequel

- un matériau polymère de la deuxième couche (120) en tant que telle présente

• un deuxième facteur primaire de résistance à la vapeur ($\mu_{21}$) pour une température (T) de T = 23°C, pour une pression (p), et pour une première humidité relative (RH$_1$) de RH$_1$ = 90 %,
• un deuxième facteur secondaire de résistance à la vapeur ($\mu_{22}$) pour la température (T) de T = 23°C, pour la pression (p), et pour une deuxième humidité relative (RH$_2$) de RH$_2$ = 30 %, de telle manière que

- à la fois le deuxième facteur primaire de résistance à la vapeur ($\mu_{21}$) et le deuxième facteur de résistance de la vapeur secondaire ($\mu_{22}$) sont inférieurs à 5000, dans lequel
- les facteurs de résistance à la vapeur ($\mu_{21}$, $\mu_{22}$) sont définis comme étant le rapport de l'épaisseur de diffusion de vapeur (S$_d$) sur l'épaisseur (d) de la couche correspondante, dans lequel l'épaisseur de diffusion de vapeur (S$_d$) est mesurée selon la norme EN ISO 12572 (2001).

**9.** Pare-vapeur adaptatif (100) selon l'une quelconque des revendications 1 à 8, dans lequel

- un matériau polymère de la deuxième couche (120) en tant que telle présente

• un deuxième facteur primaire de résistance à la vapeur ($\mu_{21}$) pour une température (T) de T = 23°C, pour une pression (p), et pour une première humidité relative (RH$_1$) de RH$_1$ = 90 %,
• un deuxième facteur secondaire de résistance à la vapeur ($\mu_{22}$) pour la température (T) de T = 23°C, pour la pression (p), et pour une deuxième humidité relative (RH$_2$) de RH$_2$ = 30 %, de telle manière que

- le rapport du deuxième facteur secondaire de résistance à la vapeur ($\mu_{22}$) sur le deuxième facteur primaire de résistance à la vapeur ($\mu_{21}$), $\mu_{22}$/$\mu_{21}$, est inférieur ou égal à 18, dans lequel
- les facteurs de résistance à la vapeur ($\mu_{21}$, $\mu_{22}$) sont définis comme étant le rapport de l'épaisseur de diffusion de vapeur (S$_d$) sur l'épaisseur (d) de la couche correspondante, dans lequel l'épaisseur de diffusion de vapeur (S$_d$) est mesurée selon la norme EN ISO 12572 (2001).

**10.** Pare-vapeur adaptatif (100) selon l'une quelconque des revendications 1 à 9, comprenant en outre

- au moins une quatrième couche (140) constituée d'un matériau polymère, la quatrième couche (140) étant raccordée à la première couche (110),
- la quatrième couche (140) comprenant au moins un parmi

• élastomère thermoplastique (TPE)
• élastomère polyester thermoplastique (TPEE),
• polyuréthane thermoplastique (TPU),
• un ionomère,
• alcool éthylvinylique (EVOH),
• polyamide (PA), tel que du polyamide-6 (PA6),
• acétate d'éthylvinyle (EVA), et
• méthacrylate d'éthyle (EMA), dans lequel la teneur en méthacrylate (MA) est comprise entre 17 % en poids et 35 % en poids,

dans lequel

- la quatrième couche (140) est agencée entre la première couche (110) et une parmi la deuxième couche (120) et la troisième couche (130), ou
- la première couche (110), la deuxième couche (120), et la troisième couche (130) sont agencées sur le même côté de la quatrième couche (140).

**11.** Pare-vapeur adaptatif (100) selon l'une quelconque des revendications 1 à 10, dans lequel

- la deuxième couche (120) est au moins aussi étanche à l'eau que des matériaux ou des films de classe W1 respectant la norme DIN EN 13111, et
- la troisième couche (130) est au moins aussi étanche à l'eau que des matériaux ou des films de classe W1 respectant la norme DIN EN 13111.

**12.** Film pare-vapeur (200), comprenant

- le pare-vapeur adaptatif (100) selon l'une quelconque des revendications 1 à 11 et
- un premier support (210), dans lequel
- le pare-vapeur adaptatif (100) est raccordé au premier support (210), et
- le premier support (210) présente une épaisseur ($d_{s1}$) qui est parallèle à la première épaisseur ($d_1$), et l'épaisseur ($d_{s1}$) du premier support (210) est comprise entre 30 $\mu$m et 150 $\mu$m.

**13.** Film pare-vapeur (200) selon la revendication 12, dans lequel

- le film pare-vapeur est au moins aussi étanche à l'eau que des matériaux ou des films de classe W1 respectant la norme DIN EN 13111 et
- le film pare-vapeur est au moins aussi résistant au feu que des matériaux ou des films de classe E respectant la norme EN 13501-1.

**14.** Bâtiment, comprenant

- le pare-vapeur adaptatif (100) selon l'une quelconque des revendications 1 à 11 ou un film pare-vapeur (200) selon la revendication 12 ou 13,
- une couche d'un premier matériau thermiquement isolant (310),
- une couche d'un deuxième matériau thermiquement isolant (320),
- une paroi extérieure (420), et
- une paroi intérieure (410), dans lequel

le pare-vapeur adaptatif (100) selon l'une quelconque des revendications 1 à 11 ou le film pare-vapeur (200) selon la revendication 12 ou 13 est agencé entre la couche de premier matériau thermiquement isolant (310) et la couche de deuxième matériau thermiquement isolant (320),

- la couche de premier matériau thermiquement isolant (310) et la couche de deuxième matériau thermiquement isolant (320) sont agencées entre la paroi extérieure (420) et la paroi intérieure (410),
- la conductivité thermique des premier et/ou deuxième matériaux thermiquement isolants (310, 320) est inférieure ou égale à 0,05 W/mK selon la norme EN 12667, et
- l'épaisseur totale ($d_{t1}$ + $d_{t2}$) des couches de matériaux thermiquement isolants (310, 320) est parallèle à la première épaisseur ($d_1$) et est supérieure ou égale à 50 mm.

**15.** Utilisation du

- pare-vapeur adaptatif (100) selon l'une quelconque des revendications 1 à 11 ou du film pare-vapeur (200) selon la revendication 12 ou 13, en tant que pare-vapeur, ladite utilisation comprenant les étapes consistant à
- agencer le pare-vapeur adaptatif (100) selon l'une quelconque des revendications 1 à 11 ou le film pare-vapeur (200) selon la revendication 12 ou 13 entre une couche de premier matériau thermiquement isolant (310) et une couche de deuxième matériau thermiquement isolant (320) et
- agencer la couche de premier matériau thermiquement isolant (310) et la couche de deuxième matériau thermiquement isolant (320) entre une paroi extérieure (420) et une paroi intérieure (410) d'un bâtiment, dans laquelle
- la conductivité thermique des premier et/ou deuxième matériaux thermiquement isolants (310, 320) est inférieure ou égale à 0,05 W/mK selon la norme EN 12667, et

- l'épaisseur totale ($d_{t1}$ + $d_{t2}$) des couches de matériaux thermiquement isolant (310, 320) est parallèle à la première épaisseur ($d_1$) et est supérieure ou égale à 50 mm.

Fig. 1a

Fig. 1b

Fig. 6a

Fig. 6b

Fig. 6c

Fig. 6d

Fig. 2a

Fig. 2b

Fig. 3

Fig. 4

EP 3 088 174 B1

Fig. 5

Fig. 7

Fig. 8

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2997649

- EP 1296002 A

**Non-patent literature cited in the description**

- **PETR SLANINA ; SARKA SILAROVA.** *Measurement of Moisture Transport through Perforated Vapour Barriers,* 20 March 2015